## Europäisches Patentamt
## European Patent Office
## Office européen des brevets

(11) Veröffentlichungsnummer: **0 204 079**
**A2**

(12) # EUROPÄISCHE PATENTANMELDUNG

(21) Anmeldenummer: **86103121.9**

(22) Anmeldetag: **08.03.86**

(51) Int. Cl.⁴: **B 23 F 23/00**
**B 23 F 5/06**

(30) Priorität: **03.05.85 DE 3515913**

(43) Veröffentlichungstag der Anmeldung:
**10.12.86 Patentblatt 86/50**

(84) Benannte Vertragsstaaten:
**CH DE FR IT LI**

(71) Anmelder: **Carl Hurth Maschinen- und Zahnradfabrik GmbH & Co**
**Moosacher Strasse 36**
**D-8000 München 40(DE)**

(72) Erfinder: **Erhardt, Manfred**
**Rainerstrasse 9e**
**D-8039 Puchheim(DE)**

(54) **Wälzantrieb für eine Zahnradschleifmaschine.**

(57) Es wird ein Wälzantrieb für eine Zahnradschleifmaschine vorgestellt, bei der Rotationsanteil der Wälzbewegung von Rollbändern bewirkt wird, die einerseits an einem quer zur Werkstückachse verschiebbaren Rollbandschlitten und andererseits auf einem Rollbogen befestigt sind. Letzterer ist koaxial mit dem Werkstück auf einem parallel zum Rollbandschlitten hin- herbewegbar angetriebenen Rollbogenschlitten gelagert. Der Rollbogenschlitten und der Rollbandschlitten sind gelenkig mit einer Schwinge verbunden, die an einem dem Werkstückdurchmesser entsprechend verstellbaren Polpunkt am Maschinengestell angelenkt ist und die hin- und hergehende Bewegung des Rollbogenschlittens auf den Rollbandschlitten überträgt. Der Polpunkt der Schwinge liegt auf einer durch die Anlenkpunkte der beiden Schlitten definierten Geraden, vorzugsweise zwischen den beiden Anlenkpunkten, d.h. der Durchmesser des Rollbogens ist dann größer als der Wälzkreis des zu bearbeitenden Werkstücks.

EP 0 204 079 A2

Croydon Printing Company Ltd.

# Wälzantrieb für eine Zahnradschleifmaschine

Die Erfindung betrifft einen Wälzantrieb einer Zahnradschleifmaschine gemäß dem Oberbegriff des Hauptanspruchs.

Bei einer bekannten Ausführung eines solchen Wälzantriebes (DE-PS 721 899) ist der angetriebene Schlitten der
Rollbandschlitten, der seine Bewegung über die Rollbänder einerseits und eine Schwinge andererseits auf den die
Werkstückspindel tragenden Rollbogenschlitten überträgt.
Der Rollbogenschlitten muß bei solchen Maschinen einen
relativ großen Weg bei seiner Hin- und Herbewegung zurücklegen, um dem Werkstück die erforderliche Wälzbewegung
mitzuteilen. Bedingt durch die Antriebsanordnung bei der
bekannten Ausführung muß der Rollbandschlitten einen noch
größeren Weg zurücklegen, was ungünstige Auswirkungen
auf das Abrollverhalten der Rollbänder und damit auf die
Wälzbewegung des Rollbogens und damit des Werkstücks hat
mit der Folge, daß das Schleifergebnis nicht befriedigend
ist.

Der bei der bekannten Einrichtung verwendete Rollbogen
läßt zwar dank der in der Schwinge geführten Gleitsteine das Bearbeiten von Zahnrädern mit gegenüber dem
Rollbogen wesentlich größerem Wälzkreisdurchmesser zu,
das Bearbeiten von Zahnrädern mit gegenüber dem Rollbogen kleinerem Wälzkreisdurchmesser ist dagegen nur bedingt möglich, weil die Gleitsteine das Einstellen eines
beliebig kleinen Abstandes zwischen dem Polpunkt der
Schwinge und dem Anlenkpunkt der Schwinge am Rollbogenschlitten verhindern. Wenn aber vornehmlich Zahnräder
mit gegenüber dem Rollbogendurchmesser größerem Wälzkreisdurchmesser bearbeitet werden, dann werden aus Ungenauigkeiten in der Wälzbewegung des Rollbogens entstehende Fehler entsprechend dem Durchmesserverhältnis vergrößert auf das Werkstück übertragen.

Die bekannte Einrichtung hat deshalb in der Praxis keine wesentliche Verbreitung gefunden, auch wenn das Prinzip, mit einem Rollbogen eines bestimmten Durchmessers Zahnräder mit weitgehend beliebigem Wälzkreisdurchmesser bearbeiten zu können, ein schnelles und vor allem preisgünstiges Umrüsten der Zahnradschleifmaschine von einem Wälzkreisdurchmesser auf einen anderen Wälzkreisdurchmesser ermöglicht. Bei anderen bekannten Zahnradschleifmaschinen muß für jeden Wälzkreisdurchmesser ein eigener Rollbogen mit genau demselben Durchmesser vorhanden sein. In der Praxis heißt das nichts anderes, als daß für nahezu jede Werkstück-Ausführung ein besonderer Rollbogen angefertigt oder beschafft werden muß, da unterschiedliche Werkstücke erfahrungsgemäß nur sehr selten genau denselben Wälzkreisdurchmesser haben. Die Anschaffungsund Lagerhaltungskosten für die zahlreichen Rollbogen sind beträchtlich.

Die der Erfindung zugrundeliegende Aufgabe besteht deshalb darin, den Wälzantrieb der eingangs genannten Art so weiterzubilden, daß die erwähnten Nachteile vermieden werden, d.h., daß ein Rollbogen eines bestimmten Durchmessers ausreichend ist, um Zahnräder innerhalb eines möglichst großen Bereiches unterschiedlicher Wälzkreisdurchmesser bearbeiten zu können, ohne daß der verwendete Rollbogendurchmesser nachteilige Auswirkungen hat auf die Bearbeitungsqualität, insbesondere auf die Rundlaufgenauigkeit und die Flankenform.

Die Aufgabe wird gelöst mit einem Wälzantrieb, der das Kennzeichen des Anspruchs 1 oder des Anspruchs 2 aufweist.

Wenn der Polpunkt der Schwinge und die Anlenkpunkte der beiden Schlitten nach dem Anspruch 1 angeordnet sind, können Zahnräder mit nahezu beliebigem Wälzkreisdurchmesser bearbeitet werden, d.h. solche mit größerem, gleichem oder kleinerem Durchmesser als dem bzw. wie der Rollbogendurchmesser. Wenn dagegen der Polpunkt der Schwinge und die Anlenkpunkte der beiden Schlitten nach dem Anspruch 2 angeordnet sind, dann können nur solche Zahnräder bearbeitet werden, deren Wälzkreisdurchmesser höchstens so groß ist wie der Rollbogendurchmesser. Das heißt, daß der zur Verwendung kommende Rollbogen im Durchmesser dem durch andere Parameter bestimmten größten auf der Maschine bearbeitbaren Wälzkreisdurchmesser entspricht und evtl. auftretende Ungenauigkeiten in der Wälzbewegung des Rollbogens keinesfalls vergrößert, sondern entsprechend dem Durchmesserverhältnis nur verkleinert auf das Werkstück übertragen werden.

Zahnradschleifmaschinen, bei denen der Rollbogenschlitten quer zur Rollbogen- bzw. zur Werkstückachse hin- und hergehend angetrieben ist, sind bekannt (DE-OS 24 59 033), aber bei diesen Maschinen muß für jeden Wälzkreisdurchmesser der zu bearbeitenden Zahnräder ein eigener Rollbogen entsprechenden Durchmessers vorhanden sein.

In der Beschreibungseinleitung der DE-PS 721 899 ist ein mit dem Anmeldegegenstand vergleichbarer Wälzantrieb erwähnt, bei dem der angetriebene Schlitten der Rollbogenschlitten ist und bei dem der Polpunkt der Schwinge und der Anlenkpunkt am Rollbandschlitten auf derselben Seite des Anlenkpunktes am Rollbogenschlitten liegen. Der Polpunkt der Schwinge ist bei diesem Wälzantrieb ortsfest angeordnet. Wie die Anlenkpunkte an der Schwinge zur Einstellung auf unterschiedliche Werkstückdurchmesser verstellt werden, geht aus dieser Textstelle nicht hervor.

Mit dem Kennzeichen des Anspruchs 3 wird erreicht, daß sich der Polpunkt und die Anlenkpunkte, insbesondere der Anlenkpunkt des Rollbandschlittens, beim Einrichten der Maschine nicht gegenseitig behindern; es können also der Polpunkt und der Anlenkpunkt des Rollbandschlittens denselben Abstand zum Anlenkpunkt des Rollbogenschlittens haben.

Mit dem Kennzeichen des Anspruchs 4 wird eine vorteilhafte Anordnung des Polpunkts aufgezeigt, die mit den Kennzeichen der Ansprüche 5 oder 6 noch in das Einrichten der Maschine wesentlich erleichternder Weise ausge-

staltet werden kann.

Der Anspruch 7 beschreibt eine zweckmäßige Anordnung der Anlenkpunkte an den beiden Schlitten, denn Untersuchungen haben gezeigt, daß die Anlenkpunkte bei einer unmittelbaren Anordnung an den Schlitten wegen der Bewegung der Schwinge eine herstellungsmäßig ungünstige Form der Schlitten erfordern.

Eine einfache Möglichkeit, die Schleifscheibe an die zu bearbeitende Werkstückflanke zuzustellen oder von ihr abzurücken ist im Anspruch 8 aufgezeigt. Ein großer Vorteil des geteilten Einstellschlittens ist, daß diese Zustell- bzw. Abrückbewegung immer auf den Wälzkreis bezogen ist. Denkbar wäre auch, diese Bewegung durch ein Verlängern oder Verkürzen der ersten oder der zweiten Führungsstange zu erzeugen. Der dafür erforderliche Aufwand wäre aber enorm, da sich die Führungsstangen mit dem Rollbogenschlitten ständig hin- und herbewegen.

Die Erfindung wird nachstehend anhand eines Ausführungsbeispiels beschrieben, das in den Figuren 1 bis 4 gezeigt ist.

Figur 1 zeigt eine Zahnradschleifmaschine, auf der die Erfindung angewendet wird,

Figur 2 zeigt einen unmaßstäblichen Ausschnitt aus der Maschine nach Figur 1, und zwar von der linken Seite ohne die Teilungseinrichtung, so daß der Rollbogen und die Schwinge zu sehen sind,

Figur 3 zeigt denselben Ausschnitt wie Figur 2, jedoch mit einem kleineren Werkstück,

Figur 4 zeigt einen Teilschnitt entlang der Linie IV-IV in Figur 2.

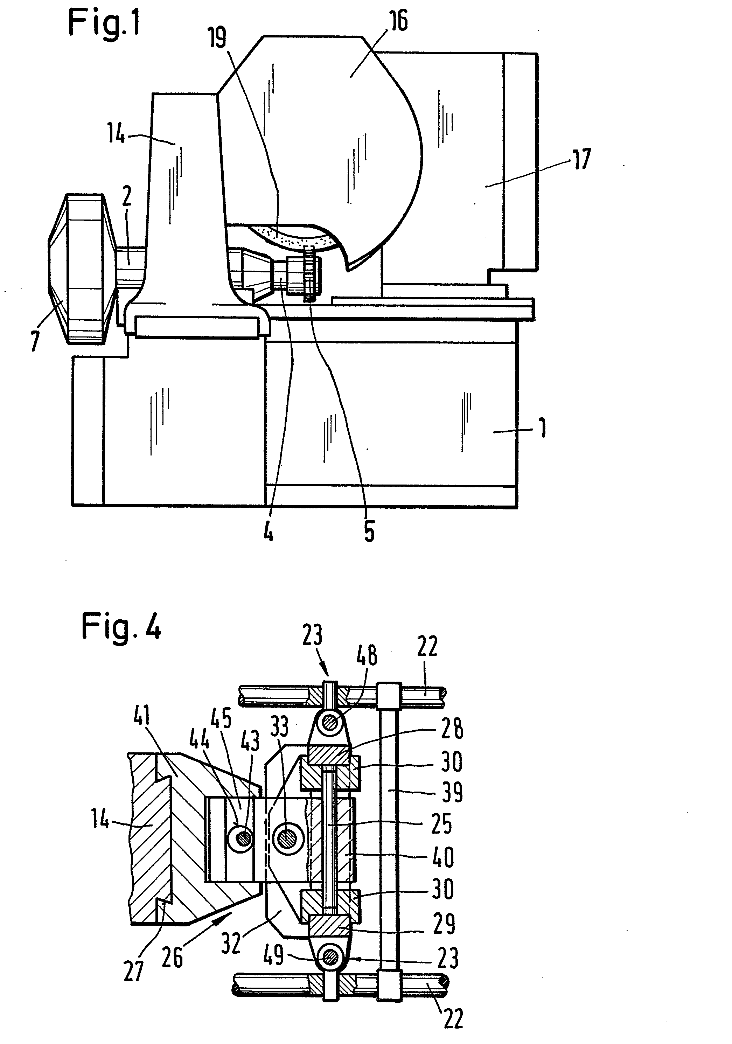

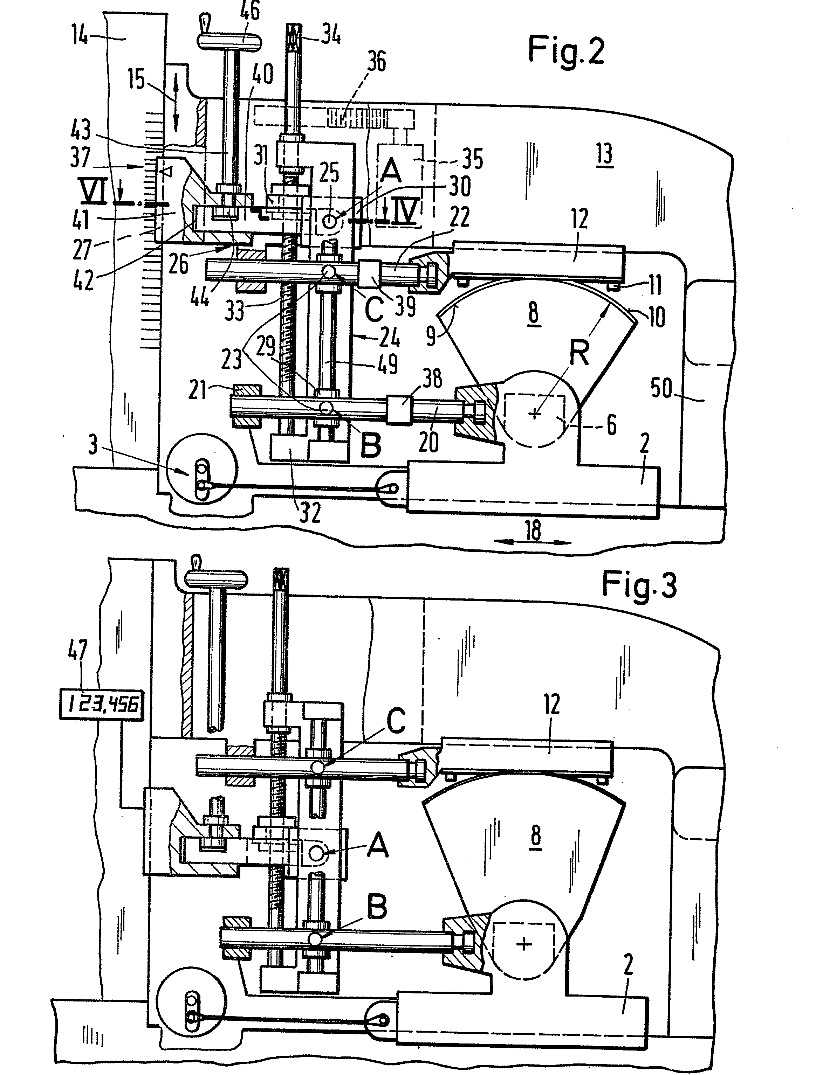

Auf einem Maschinenständer 1 einer Zahnrad-Schleifmaschine ist ein Rollbogenschlitten 2 in einer geeigneten Führung senkrecht zur Zeichenebene hin- und hergehend verschiebbar und hierzu antreibbar gelagert. Die Mittel zum Antrieb der Hin- und Herbewegung sind bekannt und in Figur 2 durch einen vereinfacht dargestellten Kurbeltrieb 3 angedeutet. Quer zur Bewegungsrichtung des Rollbogenschlittens ist eine bekannte und daher nicht ausführlich gezeichnete Werkstückspindel 4 gelagert. Die Werkstückspindel wird an ihrem dem Werkstück 5 abgewendeten Ende von einer Rollbogenhülse 6 umhüllt. Die Werkstückspindel ist zusammen mit der Rollbogenhülse quer zur Achse der Werkstückspindel hin- und hergehend querverschiebbar angeordnet, sie sind aber nicht parallel zu ihrer Achse längsverschiebbar. Das Werkstück führt also relativ zu einer Schleifscheibe 19 ausschließlich einen Tauchvorschub in Richtung der Zahnhöhe aus. Am dem Werkstück abgewendeten Ende sind Werkstückspindel und Rollbogenhülse mit einer an sich bekannten Teilungseinrichtung 7, von der in Figur 1 nur das Gehäuse gezeichnet ist, gekuppelt. Die Rollbogenhülse und die Werkstückspindel können in gleichen Lagern gelagert sein. An dem der Teilungseinrichtung abgewendeten Ende der Werkstückspindel kann das Werkstück 5, ein hochgenau zu schleifendes Zahnrad od. dgl., z.B. ein Schabrad oder ein Lehrzahnrad, aufgespannt werden. Auf der Rollbogenhülse 6 ist ein Rollbogen 8 aufgespannt, ggf. austauschbar und relativ zur Rollbogenhülse einstellbar. An dem Rollbogen sind Rollbänder 9, 10 befestigt, die mit ihrem anderen Ende in geeigneter Weise nachspannbar mit Schrauben 11 an einem Rollbandschlitten 12 angeschraubt sind. Der Rollbandschlitten ist in einer geeigneten Führung, die nicht näher gezeigt ist, an einem Ausleger 13 quer zur Achse der Werkstückspindel verschieblich gelagert. Der Ausleger ist an einem Bock 14, der auf dem Maschinenständer 1 aufgeschraubt ist, in einer nicht gezeigten Führung in vertikaler Richtung verschiebbar (Pfeil 15) geführt und dazu antreibbar und festklemmbar. Das freie Ende des Auslegers 13 ist auf einem ebenfalls auf dem Maschinenständer 1 aufgeschraubten Lagerbock höhenverstellbar und festspannbar abgestützt. Dieser Lagerbock befindet sich gegenüber vom Bock 14 und ist in Figur 1 von diesem verdeckt.

Die Schleifscheibe 19, die zum Bearbeiten einer Werkstückzahnflanke in eine Zahnlücke des Werkstücks 5 in Eingriff gebracht werden kann, ist in einem Schleifspindelstock 16 höhenverstellbar und im Winkel zum Werkstückzahn, zwecks Einstellen des Eingriffswinkels, an einem Schleifbock 17 befestigt. Der Schleifbock kann auf dem Maschinenständer 1 auf den gewünschten Schrägungswinkel der Werkstückzähne eingestellt werden.

Am Rollbogenschlitten 2 sind zwei untere Führungsstangen 20 angeordnet, die in einer horizontalen Ebene und parallel zur Bewegungsrichtung 18 des Rollbogenschlittens 2 liegen. Sie können über Streben 38 miteinander verbunden sein. Je ein Ende einer Führungsstange 20 wird vom eigentlichen Rollbogenschlitten 2 und einem davon ausgehenden Ausleger 21 aufgenommen. Am Rollbandschlitten 12 sind zwei obere Führungsstangen 22 befestigt, die parallel zu den unteren Führungsstangen 20 gerichtet sind. Sie können über Streben 39 miteinander verbunden sein. Ihr vom Rollbandschlitten 12 abgewendetes Ende ist verschiebbar im Ausleger 13 abgestützt. Der vertikale Abstand $\overline{BC}$ zwischen den oberen Führungsstangen 21 und den unteren Führungsstangen 20 entspricht genau dem Radius R des Rollbogens. Jede Führungsstange 20, 21 ist über je ein Gelenk 23 mit einer Schwinge 24 verbunden, die mittels eines quer zu den Führungsstangen 20, 21 gerichteten Zapfens 25 an einem Einstellschlitten 26 aufgehängt ist, der in einer Vertikalführung 27 am Bock 14 auf- und abverfahrbar ist. Die Schwinge 24 ist ein rahmenartiges Teil, zwischen dessen Seitenwangen 28, 29 den Zapfen 25 aufnehmende Gleitstücke 30 mittels einer im oberen (31) und unteren Rahmenteil 32 gelagerten Spindel 33 höhenverstellbar angeordnet sind. Hierfür ist die Spindel 33 an ihrem oberen Ende mit einem Profil 34 zur Aufnahme eines nicht gezeichneten Handrades od. dgl. versehen. Statt einer manuellen Betätigung ist auch eine motorische möglich, z.B. über einen Schrittmotor 35 und einen Riementrieb 36. Wenn die Spindel 33 gedreht wird, werden der Zapfen 25 und damit der Einstellschlitten 26 nach oben oder unten bewegt. Die jeweilige Stellung des Zapfens 25 kann an einer Skala 37 am Bock 14 abgelesen werden.

Die Wirkungsweise der Vorrichtung ist wie folgt. Der Zapfen 25, um den die Schwinge 24 schwingt (Polpunkt A) wird so eingestellt, daß sein vertikaler Abstand $\overline{AB}$ von den Gelenken an den unteren Führungsstangen 20 (Anlenkpunkt B) dem Wälzkreisradius des zu bearbeitenden Zahnrades 5 entspricht. Die Skala 37 weist deshalb eine Einteilung auf, die den Wälzkreisradius oder den Wälzkreisdurchmesser darstellt und so ein einfaches Einstellen des Polpunktes A ermöglicht. Wird der Rollbogenschlitten 2 mit dem Kurbeltrieb 3 in Pfeilrichtung 18 hin- und herbewegt, dann machen die unteren Führungsstangen 20 und damit der Anlenkpunkt B diese Bewegung mit. Damit wird die Schwinge 24 zu einer Pendelbewegung um den Polpunkt A gezwungen. Dabei nimmt sie die Gelenke 23 an den oberen Führungsstangen 22 (Anlenkpunkt C) mit und verleiht so über die Führungsstangen 22 dem Rollbandschlitten 12 ebenfalls eine Bewegung in Pfeilrichtung 18. Damit wird der Drehbewegung des Rollbogens 8 eine zusätzliche Bewegung überlagert, um den Ausgleich für den Unterschied zwischen Wälzkreisdurchmesser (das ist 2 . $\overline{AB}$) und Rollbogendurchmesser (das ist 2 . R bzw. 2 . $\overline{BC}$) zu schaffen. Wenn ein Zahnrad 5 geschliffen wird, dessen Wälzkreisdurchmesser größer ist als der Rollbogendurchmesser, d.h. der Polpunkt A liegt - wie in Figur 2 gezeigt - oberhalb des Anlenkpunktes C, dann wird der Rollbandschlitten 12 in derselben Richtung bewegt wie der Rollbogenschlitten 2, der Rollbogen 8 macht also eine größere Drehbewegung als bei einem seinem Durchmesser entsprechenden Wälzkreisdurchmesser. Wenn dagegen ein Zahnrad 5 geschliffen wird, dessen Wälzkreisdurchmesser kleiner ist als der Rollbogendurchmesser, d.h. der Polpunkt A liegt - wie in Figur 3 gezeigt - unterhalb des Anlenkpunktes C, dann wird der Rollbandhalter 12 in der zum Rollbogenschlitten 2 entgegengesetzten Richtung bewegt, der Rollbogen 8 macht also eine kleinere Drehbewegung als bei einem seinem Durchmesser entsprechenden Wälzkreisdurchmesser. In dem Sonderfall, wo der Wälzkreisdurchmesser des zu schleifenden Zahnrades 5 genau dem Rollbogendurchmesser entspricht, d.h. wo der Polpunkt A mit dem Anlenkpunkt C deckungsgleich ist, wird auf den Rollbandhalter 12 keine Bewegung übertragen, die Drehbewegung des Rollbogens wird durch keine andere Bewegung überlagert.

Voraussetzung für das Funktionieren der Vorrichtung ist, daß die Anlenkpunkte B, C ihre Lage relativ zu den Führungsstangen 20, 22 nicht verändern. Sie gleiten nur relativ zur Schwinge 24. Zu diesem Zweck sind außen an den Seitenwangen 28, 29 Gleitführungen 48, 49 angebracht, die eine Relativbewegung der Gelenke 23 entlang der Linie A-B ermöglichen. Da diese Gleitführungen 48, 49 in anderen Ebenen liegen als die Gleitstücke 30 kann das Einstellen des Polpunktes A völlig unabhängig vom Anlenkpunkt C erfolgen. Der Abstand $\overline{BC}$ bzw. $\overline{AB}$ ist jeweils am Umkehrpunkt des Rollbogenschlittens am Ende seiner Hin- und Herbewegung am größten.

Wenngleich bei dem Ausführungsbeispiel nach Figur 2 $\overline{AB} >$ $\overline{BC}$ ist, so ist die Anordnung nach Figur 3 mit $\overline{AB} \leqq \overline{BC}$ vorteilhafter, weil dann evtl. auftretende Ungenauigkeiten in der Wälzbewegung des Rollbogens nicht vergrößert auf das Werkstück übertragen werden können. Man wird deshalb nach Möglichkeit mit einem Rollbogen arbeiten, dessen Durchmesser dem größten auf der Maschine schleifbaren Werkstück-Wälzkreisdurchmesser entspricht. Wenn in Sonderfällen Rollbogen mit anderem Durchmesser oder anderer Form (exzentrische Rollbogen) verwendet werden sollen, dann bereitet das Umrüsten der Maschine keine besonderen Probleme, da die unteren Führungsstangen 20 unabhängig vom Rollbogen 8 nur vom Rollbogenschlitten 2 getragen werden und weil sich die oberen Führungsstangen 22 im Ausleger 13 abstützen, der ohnehin verstellt werden muß, um die Lage des Rollbandschlittens 12 dem Rollbogendurchmesser anzupassen.

In der Praxis muß es möglich sein, während der Hin- und Herbewegung des Rollbogenschlittens 2 von Hand die Schleifscheibe 19 zur Werkstück-Zahnflanke hin zuzustellen oder von dieser zu entfernen. Eine Möglichkeit hierfür ist, die Lage des Polpunktes A in horizontaler Richtung zu verändern, was im Ausführungsbeispiel mit einem geteilten Einstellschlitten 26 erreicht wird. Ein den Polpunkt A aufnehmendes Teil 40 ist in Pfeilrichtung 18 horizontal verschiebbar in einer Ausnehmung 42 eines in der Vertikalführung 27 verschiebbar aufgenommenen Teils 41 angeordnet. Im Teil 41 ist eine senkrechte Spindel 43 gelagert, an der ein Exzenter 44 angebracht ist, der spielfrei in eine Nut 45 des Teils 40 eingreift. Die Spindel 43 ist mit einem Handrad 46 versehen. Durch Verdrehen der Spindel 43 und damit des Exzenters 44 wird das Teil 40 im Sinne der Figur 2 nach rechts oder links bewegt, und damit auch der Polpunkt A. Alle zum Verstellen des Teils 40 erforderlichen Einrichtungen arbeiten selbsthemmend, es ist aber auch möglich, bekannte Klemmvorrichtungen vorzusehen. Solche Klemmvorrichtungen erfordern allerdings einen nicht unerheblichen baulichen und bedienungsmäßigen Aufwand, auch ist ein Einfluß auf die nur sehr kleinen Verstellwege nicht auszuschließen.

Die Erfindung ist nicht auf die beschriebenen Ausführungsbeispiele beschränkt, es sind auch andere Ausführungen möglich. So kann z.B. statt der Skala 37 am Bock 14 auch eine Digitalanzeige 47 (Figur 3) vorgesehen werden, oder die Gelenke 23 gleiten statt an den stangenartigen Gleitführungen 48, 49 an anderen Führungen oder - wie die Gleitstücke 30 - direkt an den Seitenwangen 28, 29. Weiter ist eine Abwandlung dahingehend möglich, daß anstelle der paarweise angeordneten Führungsstangen 20, 22 nur je eine obere und untere Führungsstange vorgesehen ist, usw..

Patentansprüche

1) Wälzantrieb einer Zahnradschleifmaschine zum Bearbeiten der Zahnflanken von gerad- oder schrägverzahnten Stirnrädern, wobei der Rotationsanteil der Wälzbewegung von Rollbändern bewirkt wird, die einerseits an einem im Maschinengestell quer zur Werkstückachse verschiebbaren Rollbandschlitten und andererseits auf einem Rollbogen befestigt sind und auf diesem abrollen, wobei der Rollbogen und das Werkstück auf einem parallel zum Rollbandschlitten verschiebbaren Rollbogenschlitten gelagert sind, und wobei der Rollbandschlitten und der Rollbogenschlitten, von denen einer hin- und hergehend angetrieben ist, über Gelenke mit einer Schwinge verbunden sind, die an einem dem Werkstückdurchmesser entsprechend verstellbaren Polpunkt am Maschinengestell angelenkt ist und die die Bewegung des angetriebenen Schlittens auf den anderen überträgt, dadurch gekennzeichnet, daß der angetriebene Schlitten der Rollbogenschlitten (2) ist und daß der Polpunkt (A) der Schwinge (24) und der Anlenkpunkt (C) am Rollbandschlitten (12) auf derselben Seite des Anlenkpunktes (B) am Rollbogenschlitten (2) liegen, wobei zwischen dem Abstand $\overline{AB}$ des Polpunktes (A) der Schwinge (24) vom Anlenkpunkt (B) des Rollbogenschlittens (2) an der Schwinge (24) und dem Abstand $\overline{BC}$ des Anlenkpunktes (B) vom Anlenkpunkt (C) des Rollbandschlittens (12) an der Schwinge (24) die Beziehung $\overline{AB} \lessgtr \overline{BC}$ besteht.

2) Wälzantrieb einer Zahnradschleifmaschine zum Bearbeiten der Zahnflanken von gerad- oder schrägverzahnten Stirnrädern, wobei der Rotationsanteil der Wälzbewegung von Rollbändern bewirkt wird, die einerseits an einem im Maschinengestell quer zur Werkstückachse verschiebbaren Rollbandschlitten und andererseits auf einem Rollbogen befestigt sind und auf diesem abrollen, wobei der Rollbogen und das Werkstück auf einem parallel zum Rollbandschlitten verschiebbaren Rollbogenschlitten gelagert sind, und wobei der Rollbandschlitten und der Rollbogenschlitten, von denen einer hin- und hergehend angetrieben ist, über Gelenke mit einer Schwinge verbunden sind, die an einem dem Werkstückdurchmesser entsprechend verstellbaren Polpunkt am Maschinengestell angelenkt ist und die die Bewegung des angetriebenen Schlittens auf den anderen überträgt, dadurch gekennzeichnet, daß der angetriebene Schlitten der Rollbogenschlitten (2) ist und daß der Polpunkt (A) der Schwinge (24) und der Anlenkpunkt (C) am Rollbandschlitten (12) auf derselben Seite des Anlenkpunktes (B) am Rollbogenschlitten (2) liegen, wobei der Abstand $\overline{AB}$ zwischen dem Polpunkt (A) der Schwinge (24) und dem Anlenkpunkt (B) des Rollbogenschlittens (2) an der Schwinge (24) kleiner oder höchstens gleich groß ist als bzw. wie der Abstand $\overline{BC}$ zwischen den Anlenkpunkten (B,C) des Rollbogenschlittens (2) und des Rollbandschlittens (12) an der Schwinge (24).

3) Wälzantrieb nach Anspruch 1 oder 2, dadurch gekennzeichnet, daß der Polpunkt (A) der Schwinge (24) am Maschinengestell einerseits und die Anlenkpunkte (B, C) an den beiden Schlitten (2,12) andererseits in zwei zueinander parallelen, von der Werkstückachse senkrecht durchdrungenen Ebenen liegen.

4) Wälzantrieb nach einem der Ansprüche 1 bis 3, dadurch gekennzeichnet, daß der Polpunkt (A) der Schwinge (24) in einem am Maschinengestell in vertikaler Richtung einstellbaren und feststellbaren Einstellschlitten (26) liegt.

5) Wälzantrieb nach Anspruch 4, gekennzeichnet durch eine Anzeige (Skala 37, Digitalanzeige), die den dem halben Wälzkreisdurchmesser des zu bearbeitenden Werkstückes (5) entsprechenden Abstand $\overline{AB}$ anzeigt.

6) Wälzantrieb nach Anspruch 4, gekennzeichnet durch eine Anzeige (Skala, Digitalanzeige), die den dem doppelten Abstand $\overline{AB}$ entsprechenden Wälzkreisdurchmesser des zu bearbeitenden Werkstücks (5) anzeigt.

7) Wälzantrieb nach einem der Ansprüche 1 bis 6, dadurch gekennzeichnet, daß der dem Rollbandschlitten (12) zugeordnete Anlenkpunkt (C) an mindestens einer mit dem Rollbandschlitten (12) starr verbundenen oberen Führungsstange (22) und der dem Rollbogenschlitten (2) zugeordnete Anlenkpunkt (B) an mindestens einer mit dem Rollbogenschlitten (2) starr verbundenen unteren Führungsstange (20) angeordnet sind, wobei die Führungsstangen (20, 22) parallel zur Bewegungsrichtung (18) der beiden Schlitten (2, 12) gerichtet sind.

8) Wälzantrieb nach Anspruch 4, gekennzeichnet durch eine zweiteilige Ausführung des Einstellschlittens (26), wobei ein erstes, den Polpunkt (A) enthaltendes Teil (40) mittels eines von außen verdrehbaren Exzenters (44), der mit einer entsprechenden Nut (45) od. dgl. dieses Teils (40) zusammenwirkt, parallel zur Bewegungsrichtung (18) der beiden Schlitten (2, 12) rela-

tiv zu einem zweiten, mit dem Maschinengestell zusammenwirkenden Teil (41) verschiebbar ist.

0204079

Fig.1

Fig. 4

0204079

Fig.2

Fig.3